# EUROPEAN PATENT SPECIFICATION

(11) **EP 1 898 720 B1**
(45) Date of publication and mention of the grant of the patent: **07.05.2014**
(21) Application number: 06747609.3
(22) Date of filing: 04.07.2006
(51) Int. Cl.: A23L 1/24

(54) **THICKENED EMULSIONS AND METHOD FOR THE PREPARATION THEREOF**
VERDICKTE EMULSIONEN UND METHODEN ZU DEREN HERSTELLUNG
EMULSIONS EPAISSIES ET LEUR PROCEDE DE PREPARATION

(30) Priority: 05.07.2005 EP 05106091
(43) Date of publication of application: 19.03.2008
(73) Proprietor: Friesland Brands B.V., 7943 PE Meppel (NL)
(72) Inventor: BENJAMINS, Jan, NL-9467 PR Anloo (NL); ZOET, Franklin Delano, NL-6987 CM Giesbeek (NL); VAN AKEN, Rogier Herman, NL-2612 JG Delft (NL)
(74) Representative: Nederlandsch Octrooibureau
(86) International application number: PCT/NL2006/050164
(87) International publication number: WO 2007/004882

(56) References cited:
- WO-A-96/38047
- US-A- 6 020 017
- US-B1- 6 447 831

## Description

### FIELD OF THE INVENTION

The present invention is in the field of oil-in-water emulsions, in particular thickened oil-in-water emulsions. Characteristically the thickening does not require a thickener in the water phase and also no crystallized fat, consequently partial coalescence of the oil droplets is not needed for the thickening process.

### BACKGROUND OF THE INVENTION

Despite the fact that oil-in-water emulsions are inherently unstable systems, many oil containing food products appear in the form of oil-in-water emulsions. Two main aspects of instability are (i) oil droplet coalescence and (ii) creaming. Stabilization towards coalescence requires addition of an emulsifier or a mixture of emulsifiers. One specific aspect of droplet coalescence is partial coalescence, which occurs due to the presence of solid fat crystals in the oil droplets. Creaming can be prevented by the addition of a polysaccharide or proteinaceous thickener to the water phase. In some emulsions the oil phase is in a fluid state, such as dressings, whereas in other emulsions the oil phase is in a (partially) crystalline state, such as milk, coffee whiteners, ice cream and whipping cream.

In such emulsion systems proteins usually act as stabilizers of oil droplets. Besides proteins these emulsion systems often contain Low Molecular Weight emulsifiers to manipulate structure, stability and aggregation. These effects are generally attributed to the fact that LMW-emulsifiers partially displace proteins from the oil/water interface. An extreme effect is that at sufficiently high concentrations mono-glycerides and other water-in oil-emulsifiers destabilize protein-based oil in water emulsions. At moderate concentrations of LMW-emulsifiers, the effects are less extreme. For example addition of mono- and/or di-glyceride emulsifiers to (artificial)-cream may cause a thickening effect. As such creams contain considerable amounts of crystallized fat, thickening is caused by partial coalescence of partially crystallized oil droplets. A special effect in the case of saturated monoglycerides is that protein displacement from the oil droplet surface is significantly increased if the temperature of the emulsion decreases to or below the critical temperature. This critical temperature is related to the crystallization temperature of mono-glyceride in solution.

Granger et al. in Colloids and Surfaces B: Biointerfaces, 2003. 32(4): p. 353-363, describe the physicochemical behavior of oil-in-water emulsions based on milk proteins and mixtures of glycerol esters. Several vegetable fats, in particular hydrogenated and refined coconut oils, refined palm oil and high oleic sunflower oil, were investigated as the oil phase. These fats contain over 30% solid fat at 20°C, with the exception of sunflower oil, which contains no crystallized fat at 20°C. These vegetable fats were mixed with a mixture of saturated mono-di-glycerides and a mixture of partially unsaturated mono-di-glycerides. After homogenization in the presence of milk proteins, added in the form of skimmed milk powder, the emulsions were cooled to 20°C, then to 4°C and aged for 24 h at 4°C. Viscosity measurements were performed on emulsions at 20°C and 4°C after homogenization and at 4°C after ageing. Obviously for the high solid fat containing oil-in-water emulsions the viscosity increases with decreasing temperature and upon ageing. However, the thickening effect in the case of sunflower oil was shown to be negligible. This indicates that besides a protein displacing emulsifier the presence of crystallized fat is a prerequisite for a thickening effect upon cooling.

WO96/38047 discloses a low fat-continuous spread, comprising 40% oil, 0.3% whey protein powder, 0.1% lecithin and 0.1% monoglyceride

GB 1 500 427 discloses oil in water emulsions containing 28 to 60 wt.% oil or fat, preferably having a melting point of between 20-40°C, 72 to 40 wt.% milk or water, 0.2 to 2.5 wt% (based on oil) lecithin and 0.5 to 2.5 wt. % (based on oil) mono-glyceride, in particular glycerol monostearate. After homogenization and sterilization of the emulsions, they were rapidly cooled and aged overnight resulting in a non-thickened (non-plasticized) cream which could be easily whipped into a thickened (structured) emulsion. This document shows that even in the presence of solid fat, thickening of an emulsion does not happen automatically.

US 6020 017 relates to milk like drinks and milk substitutes, for example powder formulations.

For health reasons, there is a general interest in food products having lower saturated and/or transunsaturated oil or fat contents. However in high oil products e.g. mayonnaise, the thick structure is a result of the close packing of the oil droplets. In lower fat products thickening is often achieved by addition of a thickener to the water phase. Well known thickeners for this purpose are alginates, agar, carrageenan, gums, certain polycarbohydrates, certain starches and the like. These thickeners may introduce a negative sensory effect. Another way to achieve the required thickening level is by making use of the partial coalescence mechanism. To use this mechanism, however, solid fat crystals must be present within the oil droplets (Boode, K. and P. Walstra (1993). "Partial Coalescence in Oil-in-Water Emulsions 1. Nature of the Aggregation." Colloids and Surfaces a-Physicochemical and Engineering Aspects 81: 121-137). The presence of crystallized fat means a higher content of saturated or trans-unsaturated fatty acids, which is also undesirable for health reasons. Another negative aspect of partial coalescence is that heating of the product will result in oil droplet coalescence. Product developers are always on the look-out for novel possibilities and tools to influence and modify emulsion structure and properties in terms of perception of food products.

US 6 447831 is concerned with spreadable food products that are especially suitable for cold use and in frying.

Therefore it is an object of the invention to provide thickened or structured oil-in-water emulsions in which the presence of solid fats or thickeners is not needed, although the use of these to assist to the thickening effect is not excluded.

### SUMMARY OF THE INVENTION

Surprisingly it has been found that when an oil-in-water emulsion, that results after homogenisation of a mixture comprising water, oil, protein and a surfactant, was cooled according to a well chosen cooling procedure, the emulsion thickened even without crystallized fat being present. Characteristic for the oil-in-water emulsion obtained is that it can be reversibly liquefied and thickened by increasing and decreasing the temperature of the emulsion respectively. Illustrative for the fact that the thickening is not caused by (partial) coalescence of oil droplets is the fact that upon increasing the temperature the size of the oil droplets remains essentially the same. It is noted that the oil used was sunflower oil, thus contrary to the teaching of Granger et al (supra) the present preparation does make it possible to provide oil-in-water emulsions of relatively high viscosity while the presence of crystallized fat is not essential.

Thus besides thickening by partial coalescence (by the presence of solid fat crystals) and/or the presence of thickeners, the present invention discloses an additional thickening effect in oil-in-water emulsions. This additional thickening effect is the result of the presence of specific emulsifiers and the application of a specific cooling treatment, and is related to an aggregation transition of the droplets that is reversible upon heating.

In the context of this invention a thickening effect means an increase in viscosity of at least a factor 5 with respect to the initial or re-heated emulsion, for example measured at 20°C at a shear rate of 10 s⁻¹. Alternatively the thickening effect can also lead to a transition from a liquid-like emulsion (more viscous than elastic) to a gelled emulsion (more elastic than viscous) measured at a small deformation at a frequency of 10 Hz.
In the context of this invention a specific cooling treatment means a slow continuous or discontinuous cooling over a temperature decrease of at least 10 °C, preferably over a temperature decrease of at least 15 °C, more preferably over a temperature decrease of at least 20 °C, even more preferably over a temperature decrease of at least 25 °C. Slow cooling means cooling at a rate of less than 5 °C/min. The temperature decrease is relative to the temperature of the homogenised starting thin emulsion.
The aggregation transition can for example be observed by microscopy or any other method suitable for analysing droplet aggregation, indicated by a transition between essentially no droplet aggregates, to a situation in which the majority of the droplets is aggregated as doublets or larger aggregates.
"Essentially no droplet aggregation" means a homogeneous distribution of oil droplets in which less than 20 % of the droplets is aggregated in doublets or larger aggregates. "The majority of droplets being aggregated" means more than 50%, preferably more than 80% of the droplets is aggregated as doublets or larger aggregates.
Reversible in the phrase 'aggregation transition of the droplets is reversible upon heating' means that the droplets can be disaggregated by heating, without much change in the droplet size distribution, thus the droplet size is in essence retained.
In the context of this invention specific emulsifiers, hereinbelow also referred to as secondary emulsifiers are defined as low-molecular-weight surfactants of less than 10 kDa, preferably less than 1 kDa, that at the concentration applied form mesoscopic (liquid crystalline) or solid phases at a temperature in the range of 0 °C to 60 °C. For the thickening effect to occur, the temperature at which the secondary emulsifier forms mesoscopic (liquid crystalline) or solid phases should be within the temperature range of the product wherein the emulsion normally is used.
Under the conditions herein specified there is an additional thickening effect of the oil-in-water emulsion that is not dependent on the thickening (e.g. by the presence of a polysaccharide or protein) of the continuous liquid and that is also not dependent on the partial coalescence (by the presence of solid fat crystals) of the emulsion droplets.

The invention concerns a method for the preparation of a thickened emulsion said method comprising the steps of
- providing a homogenised liquid emulsion comprising water, oil, wherein the oil contains less than 5 wt.% crystallized fat at 15°C, a primary emulsifier and a secondary emulsifier and
- submitting the emulsion thus provided to a cooling treatment,
said cooling treatment consisting of a slow continuous cooling at a rate of less than 5°C per minute resulting in a temperature decrease relative to the temperature of the homogenised liquid emulsion of at least 10 °C, or
said cooling treatment being a discontinuous cooling treatment comprising a period of practically constant temperature to allow the emulsion to equilibrate and subsequently slowly cooling the emulsion at a rate of less than 5°C per minute resulting in a temperature decrease relative to the temperature of the homogenised liquid emulsion of at least 10 °C,
and wherein said cooling treatment results in a thickened emulsion wherein the majority of the oil droplets is aggregated and wherein the Sauter Mean Diameter ([D3.2]) of the droplets in the thickened emulsion is changed less than 50% compared to the SMD of the droplets of the liquid emulsion before the cooling step.

The present invention also relates to a thickened emulsion obtainable according to this method, said thickened emulsion comprising 3 to 80 wt% oil, wherein the oil contains less than 5 wt.% crystallized fat at 15°C, and 0.02 to 10 wt.% of a primary emulsifier or mixture of primary emulsifiers, both amounts based on the total weight of the emulsion, and water and 0.05 to 10 wt.% based on the amount of oil of a secondary emulsifier or mixture of secondary emulsifiers and in which thickened emulsion the majority of the oil droplets is aggregated and which thickened emulsion liquefies upon increasing temperature while the emulsion droplets disaggregate and the size of oil droplets is essentially retained.
- The thickening effect in the thickened emulsion is not primarily caused by the mechanism generally known as partial coalescence. One of the ways to demonstrate that partial coalescence is not the primary cause for thickening is by showing that coalescence has not taken place or has not taken place to at least a significant extent. This can for example be done by showing that the Sauter Mean Diameter ([D3,2]) of the emulsion droplets has changed less than 50%, preferably less than 20% as compared to the droplet size before the cooling procedure.

### DETAILED DESCRIPTION OF THE INVENTION

By applying a well chosen cooling procedure to the homogenised emulsions, the present inventors have been able to prepare a thickened oil-in-water emulsion having essentially no crystallized fat or aqueous phase thickener. Essentially no crystallized fat indicates no role in the thickening process of partial coalescence, at least within the temperature range relevant for the use of the products containing the present oil-in-water emulsions.

In one embodiment the oil used is a liquid oil that essentially does not contain crystallized fat. Suitably a liquid oil contains less than 4 wt.% crystallized fat at 15°C, such as for example sunflower oil which contains no solid fat at 4°C. In general vegetable oils and fish oils or mixtures thereof may be suitably used as well as fractionised butterfat or other fats with sufficiently reduced melting points, thus in general fractionated fat, trans-esterified fat or hydrogenated fat or mixtures thereof.

Primary emulsifiers are known in the art. Suitable primary emulsifiers are in general polymeric emulsifiers such as polyelectrolytes (e.g. polymethylmethacrylate), non-ionic polymers (e.g. polyvinyl alcohol), polyampholytes (proteins) and block-copolymer analogues of these, modified starches and the like. In one embodiment proteins are used as primary emulsifier and in one embodiment any food grade protein may be suitable. Of specific interest are milk proteins such as casein and whey protein and soy proteins.

Suitable secondary emulsifiers may be selected from known emulsifiers. Preferably a suitable secondary emulsifier shows a typical temperature dependant interfacial tension behaviour. This typical behaviour means that upon decreasing the temperature, at a critical temperature, the adsorbed layer at the oil-water interface changes from liquid-like to solid-like. The critical temperature at which liquid/solid transition occurs depends on the type of the secondary emulsifier and its concentration. The choice of the type and concentration of the secondary emulsifier will be determined by the primary emulsifier and the temperature range in with the emulsion is used. In the present invention the following groups of secondary emulsifiers are suited: lecithins, (poly)-glycerolester of fatty acids, sucrose esters, sorbitan esters and the like. Examples of lecithins are soy lecithin, egg lecithin, lyso lecithin and the like. These secondary emulsifiers have in common that the molecule contains at least one long carbon chain (i.e. C12 or longer e.g up to C24 saturated or unsaturated carbon chain connected to the molecule by ester (fatty acid) bonds or ether (alcohol) bonds). In particular saturated mono- and/or di-glycerides or mixtures thereof may be suitably used, for example glycerol monostearate is readily available. Other preferred mono- and/or di-glycerides are glycerol mono- and di-ester of tallow, hardened palm fat and the like. Also in one embodiment a sucrose ester is used. Sucrose esters are esters of sucrose with fatty acids. Mono-, di- and tri-esters are commonly prepared from sucrose and methyl and ethyl esters of food fatty acids but can also be obtained extraction from sucroglycerides. Preferred sucrose esters are sucrose mono- and di- esters , esterified preferably with fatty acids with chain length C14 - C22.

Droplet size measurements are readily known in the art and can for instance be carried out using a light scattering method (Mastersizer). In the context of this invention a change in Sauter Mean Diameter (SMD) (also known as volume-surface mean diameter D[3,2]) is defined as the change in SMD of the droplets in the emulsions prior to and after the cooling treatment of the present invention.

In one embodiment, after homogenization of the emulsion, the emulsion is cooled to an intermediate temperature. This temperature varies depending on the primary and secondary emulsifier system used and their respective concentrations. This intermediate temperature is related to the temperature - interfacial tension relationship of the secondary emulsifier and is usually found in the vicinity of the liquid/solid transition temperature of the emulsifier as bulk compound. The cooling step to the intermediate temperature may be carried out quickly. At the intermediate temperature it is preferred to allow the emulsion to equilibrate while keeping the temperature practically constant. Again depending on the type of emulsifiers used it may be sufficient to equilibrate at a constant temperature for as short as five or two or even one minute or even less. A practical embodiment at small (laboratory) scale is to keep the temperature for about 10 minutes practically constant at the intermediate temperature. The cooling treatment wherein there is a period of practically constant temperature to allow the emulsion to equilibrate is called a discontinuous cooling treatment. Following this equilibration procedure it is necessary, to slowly cool the emulsion resulting in a temperature decrease relative to the temperature of the homogenised thin emulsion of at least 10 °C, preferably a temperature decrease of at least 15 °C, more preferably a temperature decrease of at least 20 °C, even preferably over a temperature decrease of at least 25 °C, even preferably over a temperature decrease of at least 30 °C. Slowly cooling means that the emulsion is not forcibly cooled. In a preferred embodiment the homogenisation of the starting emulsion takes place at a temperature above 45°C, preferably above 50°C. For applications in food products a suitable end temperature of the cooling treatment is for instance 10°C or lower, such as for instance about 8°C, 7°C, 6°C, 5°C or 4°C. The decrease in temperature may thus be from 45°C or more to 10°C or less. For example placing the emulsion in a refrigerator and leaving it there for a sufficient period of time, for example overnight, will suffice to achieve slow cooling over a desired decrease in temperature. In one embodiment the emulsion is slowly cooled at a rate less than 5°C per minute, preferably at a rate less than 3°C per minute, more preferably at a rate of less than 1°C per minute. For applications in food a preferred end point of cooling is in the range of 6°C - 4°C. Thus in one embodiment the present method comprises the step of submitting the homogenised liquid emulsion to a cooling treatment, said cooling treatment being a discontinuous cooling treatment comprising a period of practically constant temperature to allow the emulsion to equilibrate and subsequently slowly cooling the emulsion at a rate of less than 5°C per minute, preferably at a rate less than 3°C per minute resulting in a temperature decrease relative to the temperature of the homogenised liquid emulsion of at least 10 °C.

A practical embodiment at industrial scale can be that the whole cooling procedure consists of a slow continuous cooling towards the end point of cooling, without a clear resting time at an intermediate temperature. The whole cooling procedure will then occur at a rate less than 5°C per minute, preferably at a rate less than 3°C per minute, more preferably at a rate of less than 1 °C per minute. Thus in one embodiment the present method comprises the step of submitting the homogenised liquid emulsion to a cooling treatment, said cooling treatment consisting of slow continuous cooling at a rate less than 5°C per minute, preferably at a rate of less than 3°C per minute or at a rate of less than 1°C per minute, resulting in a temperature decrease relative to the temperature of the homogenised thin emulsion of at least 10 °C, preferably a temperature decrease of at least 15 °C, more preferably a temperature decrease of at least 20 °C, even preferably over a temperature decrease of at least 25 °C, even preferably over a temperature decrease of at least 30 °C.

In another aspect the present invention concerns a thickened emulsion obtainable by the method according to the invention.

As already mentioned a thickened emulsion obtained by the method as described above is also an aspect of this invention. The thickened emulsion is characterised by an oil content of between 3 to 80 wt% oil, preferably between 10 and 50 wt%, and an amount of one or more primary emulsifiers between 0.02 to 10 wt% (if proteins are used, preferably between 1 and 5 wt%). Both these amounts are based on the total weight of the emulsion, which further comprises water. Also the emulsion comprises 0.05 to 10 wt.% based on the amount of oil of a secondary emulsifier or a mixture of secondary emulsifiers, preferably less than 2 wt%. Characteristically the majority of the oil droplets in the thickened emulsion is aggregated. Aggregation of oil droplets can be verified by visual inspection under a microscope. The majority means that more than 50% of the oil droplets is aggregated. In one embodiment the majority means that less than 20% of the oil droplets is present as single droplets in the thickened emulsion. Also characteristically the emulsion liquefies upon increasing temperature while the SMD ([D3,2]) of the liquefied emulsion does not give an indication that (partial) coalescence has occurred by a significant amount. As explained before, a possible way to show that partial coalescence has not played an important role in the thickening of the emulsion is that the SMD [D3,2] has changed less than 50%, preferably less than 20% as compared to the mean droplet size of the thickened emulsion. Preferably the SMD increases less than 50%, more preferably increases less than 20%.

As can be appreciated from the above, the present method provides thickened emulsions that can be reversibly liquefied and thickened. To date this has not been possible for emulsions having no saturated and/or trans-unsaturated fat or a low saturated and/or trans-unsaturated fat content and comprising the primary ands secondary emulsifiers as described herein. When applied in food products the present thickened emulsions offer a health benefit as thickening can be obtained with less saturated and trans-unsaturated fat. Also the present method and thickened emulsions offer another tool for product developers in for example food as well as skin care products to design products with particular properties.

In the context of this invention an emulsion is thickened if the viscosity, measured at a shear rate of 10 s⁻¹ at 20 °C, is at least 5 times the initial value of the viscosity of the emulsion prior to the present cooling process.

In the case of saturated mono- and/or di-glycerides being used as secondary emulsifiers, these will add to the total content solid fat in the emulsion. Hence in the context of this invention an emulsion having no crystallized fat or being low in crystallized fat means that the fat contained in the emulsion is for less than 4 wt.% in a crystalline state at 20°C.

The present thickened emulsions are particularly suited for use in personal care or cosmetic products, in particular in skin-care products such as body milk and body cream and body (hand-)gels etc. and in facial make-up products, but also in sun-screen formulations, pharmaceutical creams, gels, ointments and the like and in general in any water-based coating formulation.

Also the present thickened emulsions are particularly suited for use in food products. Examples are cream, (dessert) toppings, ice cream, including (semi-)soft ice cream, sauces, dressings, bakery filling etc.

### EXAMPLES

### Reference emulsion without saturated monoglyceride (SMG)

### Composition:

40 % (w/w) sunflower oil
1% (w/w) BIPRO (whey protein isolate)
0.1M NaCl

### Procedure:

### Step 1

Dissolve Bipro (Whey protein) in 0.1M NaCl solution by stirring 1 h at room temperature (1 gram Bipro; 59 gram milliQ water).
Adjust pH to 6.7 with 0.1M HCl.
Heat the solution for 30 min. at 50°C.

### Step 2

Heat oil to 70 C.

### Step 3

Add sunflower oil to the aqueous protein solution (e.g. add 40 g oil to 60 gram Bipro solution).
Stir for 1 minute with Rotor-Stator mixer (ultra-turrax, small rotor blade, speed stage 1).
Place beaker in water bath of 50°C.

### Step 4

Homogenise at 70 bar, 10 passes. Temperature of the homogeniser should be above 45°C, e.g. 45-50°C or higher.
(Capacity is 100 ml/min, to make 100 ml therefore homogenise for 10 minutes)

Droplet size determination (Mastersizer, microscopy) were done directly after preparation and after 18 hours storage at 4°C. Rheological measurements were done after storage (18 hours storage at 4°C).
[D3,2] was found to be 0.832 µm.

The emulsion obtained without SMG remained thin after storage. The viscosity was not affected by the temperature history (cooling rate) of the emulsion after emulsification.

The viscosity of this thin emulsion at 20°C was 0.039 Pa.s at a shear rate of 10 sec⁻¹.

### Non-thickened emulsion and thickened emulsions containing a SMG emulsifier

### Composition

40 % (w/w) sunflower oil
1% (w/w) BIPRO
0.1M NaCl
relative to the amount of sunflower oil 0.5 wt.% saturated monoglyceride glycerol monostearate (SMG=Dimodan HR)

### Procedure.

Step 1: see step 1 of reference emulsion.

### Step 2.

Dissolve monoglyceride in sunflower oil.
Heat the mixture at 70°C for 1 h. Stir until the monoglyceride is dissolved.
This is the oil phase.

### Step 3: see step 3 of reference emulsion

### Step 4: see step 4 of reference emulsion; homogenisation was done at 50°C.

### Step 5.

If the emulsion obtained after step 4 is cooled fast to 4°C and stored at 4°C during 18 hours the resulting emulsion is thin: viscosity = 0.12 Pa.s at a shear rate of 10 sec⁻¹.

If the emulsion obtained after step 4 is cooled fast (stirring/ice-water) to 35°C and stirring is continued at this temperature for 10 minutes and after that cooled down slowly to 4°C and stored at 4°C during 18 hours the resulting emulsion is thick: viscosity = 1.5 Pa.s at a shear rate of 10 sec⁻¹.

D3,2 of thin emulsion after emulsification was: 0.858 µm;
D3,2 of thick emulsion was 0.801 µm;
D3,2 of thick emulsion after heating to 50°C was 0.860 µm (at 50°C the viscosity of the emulsion has decreased by a factor of more than 5).

For the droplet size measurements the thick emulsion and the thick emulsion after reheating to 50 °C are diluted in 0.02M SDS to disaggregate emulsion droplets.

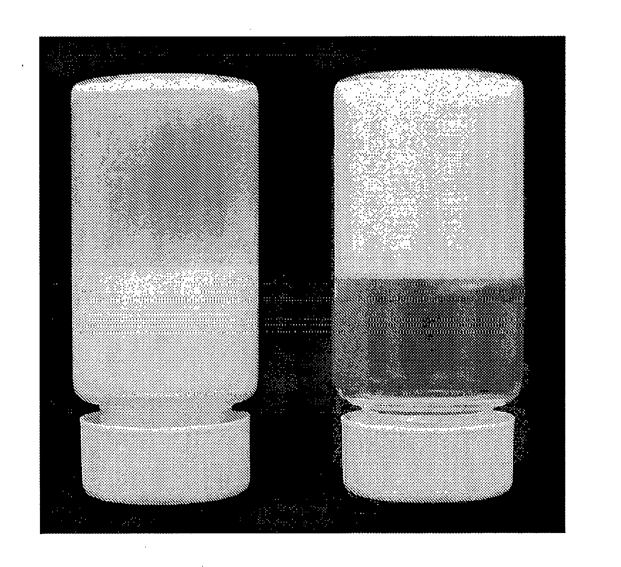

The figure shows pictures of emulsions after turning the bottles upside down after 18 hours storage at 4°C.
Left: Emulsion cooled fast to 4°C. This emulsion is thin.

Right: Emulsion cooled fast to 35°C while stirring and continued stirring at this temperature for 10 minutes followed by slow cooling to 4°C without stirring. This emulsion is thick.
Composition: 40% oil in water emulsion containing: 1% Bipro, 0.2% SMG (Dimodan HR) and 0.1 M NaCl.

## Claims

1. A method for the preparation of a thickened emulsion said method comprising the steps of
- providing a homogenised liquid emulsion comprising water, oil, wherein the oil contains less than 5 wt.% crystallized fat at 15°C, a primary emulsifier and a secondary emulsifier and
- submitting the emulsion thus provided to a cooling treatment,
said cooling treatment consisting of a slow continuous cooling at a rate of less than 5°C per minute resulting in a temperature decrease relative to the temperature of the homogenised liquid emulsion of at least 10 °C, or
said cooling treatment being a discontinuous cooling treatment comprising a period of practically constant temperature to allow the emulsion to equilibrate and subsequently slowly cooling the emulsion at a rate of less than 5°C per minute resulting in a temperature decrease relative to the temperature of the homogenised liquid emulsion of at least 10 °C,
and wherein said cooling treatment results in a thickened emulsion wherein the majority of the oil droplets is aggregated and wherein the Sauter Mean Diameter ([D3,2]) of the droplets in the thickened emulsion is changed less than 50% compared to the SMD of the droplets of the liquid emulsion before the cooling step.

2. The method according to claim 1 wherein the primary emulsifier is selected from polyelectrolytes, non-ionic polymers, polyampholytes and block-copolymer analogues of these and modified starch.

3. The method according to claim 1 wherein the primary emulsifier is a protein, preferably a food grade protein.

4. The method according to claim 3 wherein the protein is selected from milk proteins.

5. The method according to claim 4 wherein the protein is selected from whey proteins.

6. The method according to any of the preceding claims, wherein the SMD ([D3,2]) of the droplets of the liquefied emulsion that results upon increasing the temperature changes less than 50% as compared to the SMD of the emulsion droplets of the thickened emulsion.

7. The method according to any of the preceding claims wherein the oil is selected from the group consisting of fractionated fat, trans-esterified fat, hydrogenated fat, vegetable oils and fish oils and mixtures thereof.

8. The method according to any of the preceding claims wherein the secondary emulsifier is selected from the group consisting of lecithins, (poly)-glycerolester of fatty acids, sucrose esters and sorbitan esters.

9. The method according to claim 8 wherein the secondary emulsifier is selected from the group consisting of saturated mono- and/or di-glycerides and mixtures thereof.

10. The method according to claim 8 wherein the secondary emulsifier comprises a sucrose ester.

11. A thickened emulsion obtainable according to the method of any one of claims 1-10, said thickened emulsion comprising 3 to 80 wt% oil, wherein the oil contains less than 5 wt.% crystallized fat at 15°C, and 0.02 to 10 wt.% of a primary emulsifier or mixture of primary emulsifiers, both amounts based on the total weight of the emulsion, and water and 0.05 to 10 wt.% based on the amount of oil of a secondary emulsifier or mixture of secondary emulsifiers and in which thickened emulsion the majority of the oil droplets is aggregated and which thickened emulsion liquefies upon increasing temperature while the emulsion droplets disaggregate and the size of oil droplets is essentially retained.

12. The thickened emulsion according to claim 11, wherein the primary emulsifier is a protein, preferably selected from whey proteins.

13. The thickened emulsion according to claim 11 or 12, wherein the oil is selected from the group consisting of fractionated fat, trans-esterified fat, hydrogenated fat, vegetable oils and fish oils and mixtures thereof.

14. The thickened emulsion according to claim 11 - 13, wherein the secondary emulsifier is selected from the group consisting of lecithins, (poly)-glycerolester of fatty acids, sucrose esters and sorbitan esters.

15. The thickened emulsion according to claim 11 - 14, wherein the secondary emulsifier is selected from the group consisting of saturated mono- and/or di-glycerides and mixtures thereof.

16. A food product comprising a thickened emulsion according to any of claims 11 - 15.

17. A personal care product comprising a thickened emulsion according to any of claims 11-15.

## Patentansprüche

1. Verfahren zur Herstellung einer verdickten Emulsion, wobei das Verfahren die Schritte umfasst
- Bereitstellen einer homogenisierten flüssigen Emulsion umfassend Wasser, Öl, wobei das Öl weniger als 5 Gew.% kristallisiertes Fett bei 15°C enthält, einen primären Emulgator und einen sekundären Emulgator, und
- Unterziehen der so bereitgestellten Emulsion einer Kühlungsbehandlung, wobei die Kühlungsbehandlung aus einem langsamen kontinuierlichen Abkühlen mit einer Geschwindigkeit von weniger als 5°C pro Minute besteht, was eine Temperaturverringerung bezogen auf die Temperatur der homogenisierten flüssigen Emulsion von mindestens 10°C zum Ergebnis hat, oder
wobei die Kühlungsbehandlung eine diskontinuierliche Kühlungsbehandlung ist, die einen Zeitraum von praktisch konstanter Temperatur umfasst, um der Emulsion zu erlauben, zu äquilibrieren, und anschließend langsamem Abkühlen der Emulsion mit einer Geschwindigkeit von weniger als 5°C pro Minute, was eine Temperaturverringerung bezogen auf die Temperatur der homogenisierten flüssigen Emulsion von mindestens 10°C zum Ergebnis hat,
und wobei die Kühlungsbehandlung eine verdickte Emulsion zum Ergebnis hat, wobei die Mehrheit der Öltröpfchen aggregiert ist, und wobei der Sauterdurchmesser (Sauter Mean Diameter) ([D3,2]) der Tröpfchen in der verdickten Emulsion weniger als 50% verglichen mit dem SMD der Tröpfchen der flüssigen Emulsion vor dem Kühlungsschritt verändert ist.

2. Verfahren nach Anspruch 1, wobei der primäre Emulgator aus Polyelektrolyten, nichtionischen Polymeren, Polyampholyten und Blockcopolymeranaloga dieser und modifizierter Stärke ausgewählt ist.

3. Verfahren nach Anspruch 1, wobei der primäre Emulgator ein Protein, bevorzugt ein Protein von Lebensmittelqualität ist.

4. Verfahren nach Anspruch 3, wobei das Protein aus Milchproteinen ausgewählt ist.

5. Verfahren nach Anspruch 4, wobei das Protein aus Molkeproteinen ausgewählt ist.

6. Verfahren nach einem beliebigen der vorangehenden Ansprüche, wobei sich der SMD ([D3,2]) der Tröpfchen der verflüssigten Emulsion, die sich beim Erhöhen der Temperatur ergibt, um weniger als 50% verglichen mit dem SMD der Emulsionströpfchen der verdickten Emulsion verändert.

7. Verfahren nach einem beliebigen der vorangehenden Ansprüche, wobei das Öl ausgewählt ist aus der Gruppe bestehend aus fraktioniertem Fett, umgeestertem Fett, hydrogeniertem Fett, Pflanzenölen und Fischölen und Mischungen davon.

8. Verfahren nach einem beliebigen der vorangehenden Ansprüche, wobei der sekundäre Emulgator ausgewählt ist aus der Gruppe bestehend aus Lecithinen, (Poly-)Glycerinestern von Fettsäuren, Saccharoseestern und Sorbitanestem.

9. Verfahren nach Anspruch 8, wobei der sekundäre Emulgator ausgewählt ist aus der Gruppe bestehend aus gesättigten Mono- und/oder Diglyceriden und Mischungen davon.

10. Verfahren nach Anspruch 8, wobei der sekundäre Emulgator einen Saccharoseester umfasst.

11. Verdickte Emulsion, erhältlich gemäß dem Verfahren eines beliebigen der Ansprüche 1-10, wobei die verdickte Emulsion 3 bis 80 Gew.% Öl, wobei das Öl weniger als 5 Gew.% kristallisiertes Fett bei 15°C enthält, und 0,02 bis 10 Gew.% eines primären Emulgators oder einer Mischung von primären Emulgatoren, beide Mengen basierend auf dem Gesamtgewicht der Emulsion, und Wasser und 0,05 bis 10 Gew.% basierend auf der Ölmenge eines sekundären Emulgators oder einer Mischung von sekundären Emulgatoren umfasst, und in welcher verdickten Emulsion die Mehrzahl der Öltröpfchen aggregiert ist, und welche verdickte Emulsion sich beim Erhöhen der Temperatur verflüssigt, während die Emulsionströpfchen disaggregieren, und die Größe der Öltröpfchen im Wesentlichen beibehalten wird.

12. Verdickte Emulsion nach Anspruch 11, wobei der primäre Emulgator ein Protein ist, bevorzugt ausgewählt aus Molkeproteinen.

13. Verdickte Emulsion nach Anspruch 11 oder 12, wobei das Öl ausgewählt ist aus der Gruppe bestehend aus fraktioniertem Fett, umgeestertem Fett, hydrogeniertem Fett, Pflanzenölen und Fischölen und Mischungen davon.

14. Verdickte Emulsion nach Anspruch 11-13, wobei der sekundäre Emulgator ausgewählt ist aus der Gruppe bestehend aus Lecithinen, (Poly-)Glycerinestern von Fettsäuren, Saccharoseestern und Sorbitanestem.

15. Verdickte Emulsion nach Anspruch 11-14, wobei der sekundäre Emulgator ausgewählt ist aus der Gruppe bestehend aus gesättigten Mono- und/oder Diglyceriden und Mischungen davon.

16. Lebensmittelprodukt umfassend eine verdickte Emulsion gemäß einem beliebigen der Ansprüche 11-15.

17. Pflegeprodukt umfassend eine verdickte Emulsion gemäß einem beliebigen der Ansprüche 11-15.

## Revendications

1. Procédé de préparation d'une émulsion épaissie, ledit procédé comprenant les étapes consistant à :
fournir une émulsion liquide homogénéisée comprenant de l'eau, de l'huile, où l'huile contient moins de 5% en poids de matière grasse cristallisée à une température de 15°C, un émulsifiant primaire et un émulsifiant secondaire et
soumettre l'émulsion ainsi fournie à un traitement de refroidissement,
ledit traitement de refroidissement consistant en un refroidissement lent continu à une vitesse inferieure à 5°C par minute, conduisant à une diminution de température par rapport à la température de l'émulsion liquide homogénéisée d'au moins 10°C, ou
ledit traitement de refroidissement étant un traitement de refroidissement discontinu comprenant une période à température pratiquement constante afin de permettre à l'émulsion de s'équilibrer et suivi d'un refroidissement lent de l'émulsion à une vitesse inferieure à 5°C par minute conduisant à une diminution de température par rapport à la température de l'émulsion liquide homogénéisée d'au moins 10°C,
et dans lequel ledit traitement de refroidissement conduit à une émulsion épaissie dans laquelle la majorité des gouttelettes d'huile sont agrégées et dans laquelle le diamètre moyen de Sauter ([D3,2]) des gouttelettes dans l'émulsion épaissie varie de moins de 50% par rapport au SMD des gouttelettes de l'émulsion liquide avant l'étape de refroidissement.

2. Procédé selon la revendication 1, dans lequel l'émulsifiant primaire est choisi parmi des polyélectrolytes, des polymères non ioniques, des polyampholytes et des analogues de copolymères séquencés de ceux-ci et de l'amidon modifié.

3. Procédé selon la revendication 1, dans lequel l'émulsifiant primaire est une protéine, de préférence une protéine de qualité alimentaire.

4. Procédé selon la revendication 3, dans lequel la protéine est choisie parmi des protéines de lait.

5. Procédé selon la revendication 4, dans lequel la protéine est choisie parmi des protéines lactosériques.

6. Procédé selon l'une des revendications précédentes, dans lequel le SMD ([D3,2]) des gouttelettes de l'émulsion liquéfiée résultant de l'augmentation de la température varie de moins de 50% par rapport au SMD des gouttelettes d'émulsion de l'émulsion épaissie.

7. Procédé selon l'une des revendications précédentes, dans lequel l'huile est choisie dans le groupe constitué de matière grasse fractionnée, de matière grasse trans-estérifiée, de matière grasse hydrogénée, d'huiles végétales et d'huiles de poisson et de mélanges de celles-ci.

8. Procédé selon l'une des revendications précédentes, dans lequel l'émulsifiant secondaire est choisi dans le groupe constitué de lécithines, d'ester de (poly)glycérol d'acides gras, d'esters de saccharose et d'esters de sorbitane.

9. Procédé selon la revendication 8, dans lequel l'émulsifiant secondaire est choisi dans le groupe constitué de monoglycérides et/ou diglycérides saturés et de mélanges de ceux-ci.

10. Procédé selon la revendication 8, dans lequel l'émulsifiant secondaire comprend un ester de saccharose.

11. Emulsion épaissie pouvant être obtenue selon le procédé de l'une quelconque des revendications 1 à 10, ladite émulsion épaissie comprenant entre 3 et 80% en poids d'huile, où l'huile contient moins de 5% en poids de matière grasse cristallisée à une température de 15°C, et entre 0,02 et 10% en poids d'un émulsifiant primaire ou d'un mélange d'émulsifiants primaires, les deux quantités sont basées sur le poids total de l'émulsion, et de l'eau et entre 0,05 et 10% en poids d'un émulsifiant secondaire ou d'un mélange d'émulsifiants secondaires sur la base de la quantité d'huile et dans cette émulsion épaissie, la majorité des gouttelettes d'huile sont agrégées et cette émulsion épaissie se liquéfie lors d'une augmentation de la température tandis que les gouttelettes d'émulsion se désagrègent et la taille des gouttelettes d'huile est essentiellement maintenue.

12. Emulsion épaissie selon la revendication 11, dans laquelle l'émulsifiant primaire est une protéine, choisie de préférence parmi des protéines lactosériques.

13. Emulsion épaissie selon la revendication 11 ou 12, dans laquelle l'huile est choisie dans le groupe constitué de matière grasse fractionnée, de matière grasse trans-estérifiée, de matière grasse hydrogénée, d'huiles végétales et d'huiles de poisson et de mélanges de celles-ci.

14. Emulsion épaissie selon la revendication 11 à 13, dans laquelle l'émulsifiant secondaire est choisi dans le groupe constitué de lécithines, d'ester de (poly)glycérol d'acides gras, d'esters de saccharose et d'esters de sorbitane.

15. Emulsion épaissie selon la revendication 11 à 14, dans laquelle l'émulsifiant secondaire est choisi dans le groupe constitué de monoglycérides et/ou diglycérides saturés et de mélanges de ceux-ci.

16. Produit alimentaire comprenant une émulsion épaissie selon l'une des revendications 11 à 15.

17. Produit de soin personnel comprenant une émulsion épaissie selon l'une des revendications 11 à 15.
